# EUROPÄISCHE PATENTSCHRIFT

(11) **EP 1 835 149 B1**
(45) Veröffentlichungstag und Bekanntmachung des Hinweises auf die Patenterteilung: **13.03.2019**
(21) Anmeldenummer: 06005566.2
(22) Anmeldetag: 17.03.2006
(51) Int. Cl.: F02C 9/00, F01D 21/00

(54) **Vorrichtung und Verfahren zum Überwachen des Betriebs einer Turbine**
Device and method for operational monitoring of a gas turbine
Dispositif et méthode de surveillance du fonctionnement d'une turbine à gaz

(43) Veröffentlichungstag der Anmeldung: 19.09.2007
(73) Patentinhaber: Siemens Aktiengesellschaft, 80333 München (DE)
(72) Erfinder: Ceric, Hajrudin, 46045 Oberhausen (DE); Dahlke, Stefan, 45481 Mülheim a.d.Ruhr (DE); Gruschka, Uwe, 41564 Kaarst (DE); Heue, Matthias, 44879 Bochum (DE); Lenze, Martin, 45359 Essen (DE); Matern, Thomas, 46145 Oberhausen (DE); Minninger, Dieter, 46535 Dinslaken (DE); Schaberg, Axel Dr., 59302 Oelde (DE); Schmidt, Stephan, 45133 Essen (DE); Skreba, Steffen Dr., 45133 Essen (DE); Stöcker, Bernd Dr., 46147 Oberhausen (DE); Vosberg, Volker Dr., 45476 Mülheim an der Ruhr (DE); Waldinger, Roger, 45479 Mülheim an der Ruhr (DE)

(56) Entgegenhaltungen:
- EP-A- 1 363 248
- WO-A-02/18879
- US-A- 3 950 985
- US-A1- 2004 148 129
- PATENT ABSTRACTS OF JAPAN Bd. 015, Nr. 069 (M-1083), 19. Februar 1991 (1991-02-19) & JP 02 294525 A (HITACHI LTD), 5. Dezember 1990 (1990-12-05)

## Beschreibung

Die Erfindung betrifft eine Turbine sowie Vorrichtung und ein Verfahren zum Überwachen des Betriebs der Turbine, insbesondere des Betriebs einer Gasturbine.

Der Betrieb moderner Turbinen, insbesondere stationärer Gasturbinen, wird in vielfältiger Weise überwacht. Ein wichtiger Aspekt der Überwachung ist die Kontrolle des so genannten Lebensdauerverbrauchs. Dabei soll ermittelt werden, wann einzelne Bauteile der Turbine und/oder die Turbine insgesamt ihre Lebensdauer erreicht und entsprechend gewartet, instand gesetzt oder ersetzt werden müssen. Mit der Erfassung des Lebensdauerverbrauchs wird also die Notwendigkeit einer Inspektion oder Revision beurteilt.

Derzeit wird der Lebensdauerverbrauch von Turbinen in so genannten "äquivalenten Betriebsstunden" gemessen. Bei diesem Verfahren werden den verschiedenen Betriebsphasen der Turbine (beispielsweise verschiedenen Startvorgängen) unterschiedliche Belastungswerte zugeordnet und dann eine in Betriebsstunden ausgedrückte Gesamtbelastung errechnet bzw. akkumuliert. Das derartige Vorgehen ist zwar vergleichsweise einfach und kostengünstig, zugleich aber auch relativ starr. Durch die Definition der äquivalenten Betriebsstunden kann die Belastung der Turbine insbesondere im Hinblick auf Spannungen an verschiedenen Bauteilen der Turbine nur bedingt nachgebildet und richtig erfasst werden.

Verfahren gemäß dem Stand der Technik sind aus der US 2004/0148129 A1 sowie der US 3,950,985 bekannt.

Es ist eine Aufgabe der Erfindung eine Überwachung des Betriebs einer Turbine zu ermöglichen, die qualitativ hochwertiger und zugleich kostengünstig ist, insbesondere im Hinblick auf den Lebensdauerverbrauch der Turbine.

Die Aufgabe ist erfindungsgemäß mit einer Turbine sowie einer Vorrichtung zum Überwachen des Betriebs der Turbine, insbesondere des Betriebs einer Gasturbine, gelöst, die Vorrichtung umfassend eine Einrichtung zum Ermitteln der Spannungssituation an mindestens einem Bauteil der Turbine und eine Einrichtung zum Ermitteln eines Lebensdauerverbrauchs der Turbine in Abhängigkeit des Verlaufs der ermittelten Spannungssituationen an dem mindestens einen Bauteil, wobei die Einrichtung zum Ermitteln der Spannungssituation ein Mittel zum Ermitteln der Dehnung an mindestens zwei Stellen im und/oder am mindestens einen Bauteil und ein Mittel zum Ermitteln der Spannungssituation in Abhängigkeit der ermittelten Dehnungen aufweist.

Die Aufgabe ist ferner mit einem Verfahren zum Überwachen des Betriebs der Turbine, insbesondere des Betriebs einer Gasturbine, gelöst, mit den Schritten: Ermitteln der Spannungssituation an mindestens einem Bauteil der Turbine und Ermitteln des Lebensdauerverbrauchs der Turbine in Abhängigkeit des Verlaufs der ermittelten Spannungssituationen an dem mindestens einen Bauteil, Ermitteln der Dehnung an mindestens zwei Stellen im und/oder am mindestens einen Bauteil und Ermitteln der Spannungssituation in Abhängigkeit der ermittelten Dehnungen.

Die erfindungsgemäße Einrichtung zum Ermitteln der Spannungssituation an mindestens einem Bauteil kommt bevorzugt an dickwandigen Bauteilen einer Gasturbine zum Einsatz, an denen während einer Be- und Entlastung der Turbine aufgrund der Änderungen der Temperaturen der die Turbine durchströmenden Medien die größten Spannungen auftreten. An diesen Bauteilen wird erfindungsgemäß der reale Verlauf der Spannungen ermittelt und in eine Anzeige sowie in eine Umrechnung überführt, anhand derer eine verbesserte Abschätzung des tatsächlichen Lebensdauerverbrauchs der Turbine möglich ist.

Dadurch kann zum einen der wirkliche Lebensdauerverbrauch einer Turbine wesentlich genauer beurteilt werden und die Turbine muss entsprechend erst später gewartet bzw. inspiziert werden, was einen erhöhten Kundennutzen zur Folge hat. Zum anderen können die Be- und Entlastungsgradienten der Turbine besser an den Bedarf des Betreibers angepasst werden, da die aktuell herrschenden Spannungen angezeigt und entsprechend genau beurteilt werden können.

So kann beispielsweise, wenn schnell eine hohe Leistung benötigt wird, ein steiler Lastgradient gefahren werden. Zugleich kann der Bediener direkt sehen, welche Spannungen an den höchstbelasteten Bauteilen der Turbine dann aktuell vorliegen und wie sich die Lebensdauer der Turbine dadurch reduziert. Andererseits ist auch eine für die Turbine hinsichtlich der Spannungen und damit der Lebensdauer sehr schonende Fahrweise möglich.

Bei einer vorteilhaften Weiterbildung der Erfindung umfasst daher das Anzeigen der Spannungssituation ein Mittel zum Anzeigen des Verlaufs der ermittelten Spannungssituation an dem mindestens einen Bauteil.

Das Ermitteln der Spannungssituation erfolgt mit Hilfe eines Mittels zum Ermitteln der Dehnung an mindestens zwei Stellen im und/oder am mindestens einen Bauteil und einem Mittel zum Ermitteln der Spannungssituation in Abhängigkeit der ermittelten Dehnungen. Besonders bevorzugt ist im Inneren und an mindestens einer der Oberflächen des mindestens einen Bauteils eine Dehnungsmessung vorgesehen. So kann an kritischen Bauteilen der Turbine sowohl im Inneren des Bauteils als auch an dessen Oberfläche die Dehnung des Materials des Bauteils während des Betriebs der Turbine ständig gemessen werden. Eine derartige Messung kann auch im Hinblick auf die Beurteilung anderer Betriebszustände der Turbine von Vorteil sein bzw. wegen anderer Funktionen zumindest teilweise bereits vorgesehen sein. Auf der Grundlage der derart ermittelten Dehnungen wird erfindungsgemäß ständig die Spannungssituation am Bauteil ermittelt. Diese Ermittlung erfolgt bevorzugt mit einem Finite-Elemente-Verfahren. Die ermittelten Spannungen werden vorteilhaft an einer Leitwarte der Turbine angezeigt. Die Umrechnung und Anzeige erfolgt bevorzugt zeitgleich bzw. online während des Betriebs der Turbine. Die Einrichtung zum Ermitteln des Lebensdauerverbrauchs umfasst daher bevorzugt ein Mittel zum Anzeigen des Lebensdauerverbrauchs während des Betriebs der Turbine.

Nachfolgend wird ein Ausführungsbeispiel des erfindungsgemäßen Verfahrens und der Turbine sowie der Vorrichtung zur Durchführung des Verfahrens anhand der beigefügten schematischen Zeichnungen näher erläutert.

Es zeigt:
FIG 1 eine stark vereinfachte Darstellung eines Ausführungsbeispiels der erfindungsgemäßen Turbine sowie Vorrichtung und
FIG 2 ein Ablaufdiagramm eines Ausführungsbeispiels des Verfahrens gemäß der Erfindung.

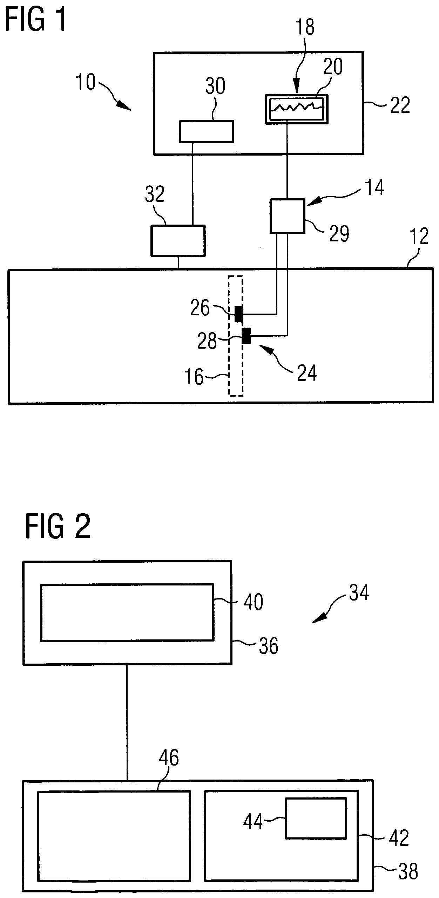

In FIG 1 ist eine Vorrichtung 10 zum Überwachen des Betriebs einer Turbine 12 in Gestalt einer Gasturbine veranschaulicht. Die Vorrichtung 10 umfasst eine Einrichtung 14 zum Ermitteln der Spannungssituation an mindestens einem Bauteil 16 der Turbine 12. Ferner umfasst die Vorrichtung 10 eine Einrichtung 18 zum Ermitteln eines Lebensdauerverbrauchs der Turbine 12, mit welcher der Lebensdauerverbrauch in Abhängigkeit des Verlaufs der ermittelten Spannungssituationen an dem mindestens einen Bauteil 16 ermittelt wird.

An der Vorrichtung 10 ist zudem eine Einrichtung 20 zum Anzeigen der Spannungssituation an dem mindestens einen Bauteil 16 während des Betriebs der Turbine 12 vorgehen. Diese Einrichtung 20 ist in die Einrichtung 18 zum Ermitteln des Lebensdauerverbrauchs der Turbine 12 integriert.

Die Einrichtung 18 zum Ermitteln des Lebensdauerverbrauchs der Turbine 12 ist insgesamt in einer Leitwarte 22 für die Turbine 12 angeordnet, an welcher sich noch weitere nicht dargestellte Überwachungs- und Bedienelemente befinden.

Die Einrichtung 20 zum Anzeigen der Spannungssituation ist dabei mit einem zweidimensionalen elektronischen Anzeigegerät in Form eines Bildschirms gestaltet, welches ein Mittel zum Anzeigen des Verlaufs der ermittelten Spannungssituation an dem mindestens einen Bauteil 16 umfasst. Die Einrichtung 20 umfasst ferner ein Mittel zum Anzeigen des Lebensdauerverbrauchs während des Betriebs der Turbine 12.

Die Einrichtung 14 zum Ermitteln der Spannungssituation ist an bzw. in der Turbine 12 angeordnet und umfasst Mittel bzw. Elemente 24 zum Ermitteln der Temperatur und/oder Dehnung an mindestens zwei Stellen im und am Bauteil 16. Diese Mittel 24 sind ein erster Temperatursensor 26, welcher im Inneren des Bauteils 16 die Temperatur misst, sowie ein zweiter Temperatursensor 28, welcher die Temperatur an einer der Oberflächen des Bauteils 16 misst. Die Temperatursensoren 26 und 28 sind mit einer Auswerteeinheit 29 betrieblich gekoppelt, welche aus den gemessenen absoluten Temperaturwerten und den Temperaturverläufen mittels einer Finite-Elemente-Methode die Spannungssituation am Bauteil 16 ermitteln kann.

An der Leitwarte 22 sind schließlich Bedienelemente 30 vorgesehen, mittels denen ein nicht veranschaulichter Bediener der Vorrichtung 10 auf eine Steuerung 32 Einfluss nehmen und die Turbine 12 in Abhängigkeit der ihm von der Einrichtung 20 übermittelten Informationen steuern kann. Der Bediener erhält dabei zeitnah Rückmeldung von der Einrichtung 20, wie sich seine Steuerungsvorgänge auf die Spannungssituation am Bauteil 16 und ferner auf den Lebensdauerverbrauch der Turbine 12 auswirken.

In FIG 2 ist ein Verfahren 34 zum Überwachen des Betriebs der in FIG 1 dargestellten Turbine 12 veranschaulicht.

Das Verfahren 34 umfasst einen ersten Schritt 36 des Ermittelns der Spannungssituation an dem Bauteil 16 und einen zweiten Schritt 38 des Ermittelns des Lebensdauerverbrauchs der Turbine 12 in Abhängigkeit des Verlaufs der ermittelten Spannungssituationen an dem Bauteil 16.

Der Schritt 36 umfasst einen Schritt 40 des Ermittelns der Temperaturen an mindestens zwei Stellen im und/oder am Bauteil 16 und der Schritt 38 umfasst ein Ermitteln der Spannungssituation in Abhängigkeit der ermittelten Temperaturen.

Der Schritt 38 umfasst ferner ein Anzeigen 42 der Spannungssituation an dem Bauteil 16 während des Betriebs der Turbine 12 und ein Anzeigen 44 des Verlaufs der ermittelten Spannungssituation. Schließlich umfasst der Schritt 38 noch ein Anzeigen 46 des Lebensdauerverbrauchs während des Betriebs der Turbine 12.

## Patentansprüche

1. Turbine (12) sowie Vorrichtung (10) zum Überwachen des Betriebs der Turbine (12),
insbesondere des Betriebs einer Gasturbine,
die Vorrichtung umfassend eine Einrichtung (14) zum Ermitteln der Spannungssituation an mindestens einem Bauteil (16) der Turbine (12) und
eine Einrichtung (18) zum Ermitteln eines Lebensdauerverbrauchs der Turbine (12) in Abhängigkeit des Verlaufs der ermittelten Spannungssituationen an dem mindestens einen Bauteil (16),
**dadurch gekennzeichnet, dass**
die Einrichtung (14) zum Ermitteln der Spannungssituation ein Mittel (24) zum Ermitteln der Dehnung an mindestens zwei Stellen im und/oder am mindestens einen Bauteil (16) und ein Mittel (29) zum Ermitteln der Spannungssituation in Abhängigkeit der ermittelten Dehnungen aufweist.

2. Turbine (12) sowie Vorrichtung (10) nach Anspruch 1, mit einer Einrichtung (20) zum Anzeigen der Spannungssituation an dem mindestens einen Bauteil (16) während des Betriebs der Turbine (12).

3. Turbine (12) sowie Vorrichtung (10) nach Anspruch 2,
bei der die Einrichtung (20) zum Anzeigen der Spannungssituation ein Mittel zum Anzeigen des Verlaufs der ermittelten Spannungssituation an dem mindestens einen Bauteil (16) umfasst.

4. Turbine (12) sowie Vorrichtung (10) nach einem der Ansprüche 1 bis 3,
bei der die Einrichtung (18) zum Ermitteln eines Lebensdauerverbrauchs ein Mittel zum Anzeigen des Lebensdauerverbrauchs während des Betriebs der Turbine (12) umfasst.

5. Verfahren (34) zum Überwachen des Betriebs einer Turbine (12),
insbesondere des Betriebs einer Gasturbine,
mit den Schritten:
Ermitteln (36) der Spannungssituation an mindestens einem Bauteil (16) der Turbine (12) und
Ermitteln (38) des Lebensdauerverbrauchs der Turbine (12) in Abhängigkeit des Verlaufs der ermittelten Spannungssituationen an dem mindestens einen Bauteil (16),
**gekennzeichnet durch** den Schritt:
Ermitteln (40) der Dehnung an mindestens zwei Stellen im und/oder am mindestens einen Bauteil (16) und
Ermitteln (36) der Spannungssituation in Abhängigkeit der ermittelten Dehnungen.

6. Verfahren (34) nach Anspruch 5,
mit den Schritten:
Ermitteln (36) der Spannungssituation an mindestens einem Bauteil der Turbine und
Anzeigen (42) der Spannungssituation an dem mindestens einen Bauteil (16) während des Betriebs der Turbine (12).

7. Verfahren nach Anspruch 6, **gekennzeichnet durch** den Schritt:
Anzeigen (44) des Verlaufs der ermittelten Spannungssituationen.

8. Verfahren nach einem der Ansprüche 5 bis 7, **gekennzeichnet durch** den Schritt:
Anzeigen (46) des Lebensdauerverbrauchs während des Betriebs der Turbine (12).

## Claims

1. Turbine (12) and device (10) for monitoring the operation of the turbine (12),
in particular the operation of a gas turbine,
the device comprising a unit (14) for determining the stress situation on at least one component (16) of the turbine (12) and
a unit (18) for determining a service life consumption of the turbine (12) as a function of the profile of the determined stress situations on the at least one component (16),
**characterized in that**
the unit (14) for determining the stress situation has a means (24) for determining the strain at at least two points in and/or on at least one component (16), and a means (29) for determining the stress situation as a function of the determined strains.

2. Turbine (12) and device (10) according to Claim 1,
having a unit (20) for displaying the stress situation on the at least one component (16) during the operation of the turbine (12).

3. Turbine (12) and device (10) according to Claim 2,
in which the unit (20) for displaying the stress situation comprises a means for displaying the profile of the determined stress situation on the at least one component (16) .

4. Turbine (12) and device (10) according to one of Claims 1 to 3,
in which the unit (18) for determining a service life consumption comprises a means for displaying the service life consumption during the operation of the turbine (12).

5. Method (34) for monitoring the operation of a turbine (12), in particular the operation of a gas turbine,
having the steps:
determining (36) the stress situation on at least one component (16) of the turbine (12) and
determining (38) the service life consumption of the turbine (12) as a function of the profile of the determined stress situations on the at least one component (16),
**characterized by** the step:
determining (40) the strain at at least two points in and/or on the at least one component (16) and
determining (36) the stress situation as a function of the determined strains.

6. Method (34) according to Claim 5,
having the steps:
determining (36) the stress situation on at least one component of the turbine and
displaying (42) the stress situation on the at least one component (16) during the operation of the turbine (12).

7. Method according to Claim 6, **characterized by** the step:
displaying (44) the profile of the determined stress situations.

8. Method according to one of Claims 5 to 7,
**characterized by** the step:
displaying (46) the service life consumption during the operation of the turbine (12).

## Revendications

1. Turbine (12) ainsi que système (10) de contrôle du fonctionnement de la turbine (12),
notamment du fonctionnement d'une turbine à gaz,
le système comprenant un dispositif (14) de détermination de la situation de tension sur au moins une pièce (16) de la turbine (12) et
un dispositif (18) de détermination d'une consommation de durée de vie de la turbine (12) en fonction de la variation des situations de tension déterminées sur la au moins une pièce (16),
**caractérisée en ce que**
le dispositif (14) de détermination de la situation de tension a un moyen (24) de détermination de la dilatation en au moins deux points dans et/ou sur au moins une pièce (16) et un moyen (29) de détermination de la situation de tension en fonction des dilatations déterminées.

2. Turbine (12) ainsi que système (10) suivant la revendication 1,
comprenant un dispositif (20) pour indiquer la situation de tension sur la au moins une pièce (16) pendant le fonctionnement de la turbine (12).

3. Turbine (12) ainsi que système (10) suivant la revendication 2,
dans laquelle le dispositif (20), pour indiquer la situation de tension, comprend un moyen pour indiquer la variation de la situation de tension, qui a été déterminée sur la au moins une pièce (16).

4. Turbine (12) ainsi que système (10) suivant l'une des revendications 1 à 3,
dans laquelle le dispositif (18) de détermination d'une consommation de durée de vie comprend un moyen pour indiquer la consommation de durée de vie pendant le fonctionnement de la turbine (12).

5. Procédé (34) de contrôle du fonctionnement d'une turbine (12),
notamment du fonctionnement d'une turbine à gaz,
comprenant les stades :
détermination (36) de la situation de tension sur au moins une pièce (16) de la turbine (12) et
détermination (38) de la consommation de durée de vie de la turbine (12) en fonction de la variation des situations de tension déterminées sur la au moins une pièce (16),
**caractérisé par** le stade :
détermination (40) de la dilatation en au moins deux points dans et/ou sur au moins une pièce (16) et
détermination (36) de la situation de tension en fonction des dilatations déterminées.

6. Procédé (34) suivant la revendication 5,
comprenant les stades :
détermination (36) de la situation de tension sur au moins une pièce de la turbine et
indication (42) de la situation de tension sur la au moins une pièce (16) pendant le fonctionnement de la turbine (12).

7. Procédé suivant la revendication 6, **caractérisé par** le stade :
indication (44) de la variation des situations de tension déterminées.

8. Procédé suivant l'une des revendications 5 à 7, **caractérisé par** le stade :
indication (46) de la consommation de durée de vie pendant le fonctionnement de la turbine (12).
